# EUROPEAN PATENT SPECIFICATION

(11) **EP 0 408 523 B1**
(45) Date of publication and mention of the grant of the patent: **27.01.1993**
(21) Application number: 90830316.7
(22) Date of filing: 10.07.1990
(51) Int. Cl.: F02B 29/04, F02B 67/00

(54) **A supercharged diesel engine for boats**
Aufgeladene Dieselbrennkraftmaschine für Boote
Moteur diesel suralimenté pour bateaux

(30) Priority: 11.07.1989 IT 6757889
(43) Date of publication of application: 16.01.1991
(73) Proprietor: IVECO FIAT S.p.A., 10156 Torino (IT)
(72) Inventor: Ghiringhelli, Carlo, I-20142 Milano (IT)
(74) Representative: Bosotti, Luciano

(56) References cited:
- CH-A- 217 848
- DE-A- 3 517 567
- DE-B- 1 232 787
- FR-A- 972 176
- FR-A- 2 364 340
- FR-A- 2 372 961
- GB-A- 542 592
- US-A- 3 306 032
- US-A- 3 442 258
- Diesel Engine Principles and Practice, (George Newnes Ltd. GB 1955),pages 2-8/2-9.

## Description

The present invention relates to a supercharged diesel engine, particularly for marine applications, according to the pre-characterizing portion of Claim 1.

Such an engine is disclosed by US-A-3.442.258 in which the three-way valve is inserted in the primary cooling installation. In this solution the cooling medium is supplied to the air-liquid exchanger for cooling the compressed air only above such a temperature which is equal to the temperature of the cooling medium for the engine cooling. The valve needs a complex control system since it has to be actuated in dependence on the temperature of the precompressed combustion air. Without such complex control system, for some operating conditions of the engine the precompressed combustion air, instead of being cooled off, is heated up so that the thermal loading of the internal combustion engine increases disadvantageously. For marine applications, particularly in supercharged diesel engines, in which the temperature of the cooling medium is independent from the operating conditions of the engine, the problem of so-called "smokiness when cold" due to excessive cooling of the compressed air in the inter-cooler, which does not allow-optimal combustion at low operating loads of the engine, is particularly apparent. These low running speeds are typical of displacement navigation of the boat or of tick-over operation with the propeller shaft disengaged (conditions which arise, for example, in harbours when the engine is kept running to supply the electrical services or to charge the batteries).

Current solutions to the problem of smokiness when cold, which include the bypassing of the compressed air or the chocking of the water to the exchanger, have problems both as regards the complexity of manufacture (with reference to the problems of sealing a bypass valve for compressed air) and due to the need to provide an additional specific control for the smoke-reducing devices.

The object of the present invention is to provide a supercharged diesel engine of the type specified at the beginning of the description which overcomes the above problem simply and cheaply by making use of a characteristic peculiar to marine engines, in which the load varies substantially univocally in dependence on the engine speed.

According to the invention, this object is achieved by virtue of the features set forth in the characterizing portion of Claim 1.

By virtue of these characteristics, the cooling of the supercharging air can be prevented or reduced in dependence on the position of the accelerator lever of the injection pump. The valve means may be controlled mechanically by means of a linkage or electrically by suitable actuators. The smokiness when cold, which occurs as a result of a low temperature of the water supplied to the exchanger at low or intermediate speeds/loads, is therefore eliminated.

Further characteristics and advantages of the supercharged diesel engine according to the invention will become clear from the detailed description which follows with reference to the appended drawings, provided by way of non-limiting example, in which:
Figure 1 is a schematic view of an engine according to the invention,
Figure 2 is a schematic view which shows various operating positions of a three-way valve inserted in the liquid supply pipe of the air-liquid heat exchanger,
Figure 3 is a side view of the valve of Figure 2, on an enlarged scale,
Figure 4 is a section taken on the line IV-IV of Figure 3,
Figure 5 is an exploded perspective view of the valve of Figures 3 and 4, and
Figure 6 is a section taken on the line VI-VI of Figure 5.

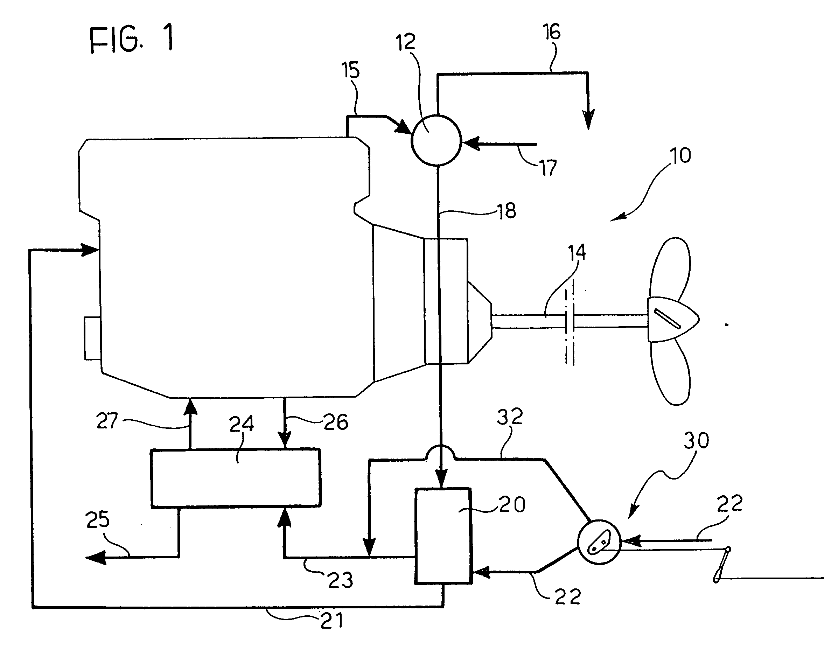

With reference to the drawings, a supercharged diesel engine, generally indicated 10, has an exhaust-driven turbocompressor 12 and is adapted to rotate a propeller shaft 14 (Figure 1).

The exhaust of the engine is indicated 15 in Figure 1 and, after driving the turbocompressor 12, is discharged to the atmosphere at 16. After compression, the air drawn in, indicated 17, is conveyed through a duct 18 to an air/water heat exchanger 20 from which the cooled compressed air 21 is supplied to the cylinders of the engine. The air/water exchanger 20 has a connector for the admission of sea water 22 for cooling and an outlet connector connected by a pipe 23 to a water/water exchanger 24 for cooling the engine. The hot-water outlet of the exchanger 24 is indicated 25, and the water inlet and outlet pipes of the exchanger 24 of the engine cooling system are indicated 26 and 27 respectively.

A three-way valve 30 is connected in the cooling water supply pipe 22 (which is connected to a sea-water intake of the boat) and has an inlet connector 30a, a first outlet connector 30b connected to the air/water exchanger 20, and a second outlet connector 30c connected to a pipe 32 which bypasses the exchanger 20 and conveys the water to the supply pipe 23 of the water/water exchanger 24.

The three-way valve 30 is of the type with a cylindrical obturator and has a body 35 with a hollow cylindrical seat 35a, an obturator 36, and a closure cover 38 fixed to the body 35 in correspondence with a flange 35b thereof by means of screws. The obturator 36 has a central operating shaft 36a which passes sealingly through a central hole 38a in the cover 38 and is keyed at 39 to a shaped plate 40 which acts as the operating lever of the valve. The plate 40 has a portion 40a in which a slot 42 is formed and a diametrally opposite portion 40b in which a through-hole 44 is formed.

The cylindrical obturator 36 has an end face 36b with a circumferential groove 45 for cooperating with a pin 46 housed in a corresponding seat 47 of the cover 38 to limit the rotation of the obturator. The latter also has first and second radial apertures 50 and 52 defined between the end faces of the obturator and between respective shaped side walls 53 and 54 of the obturator.

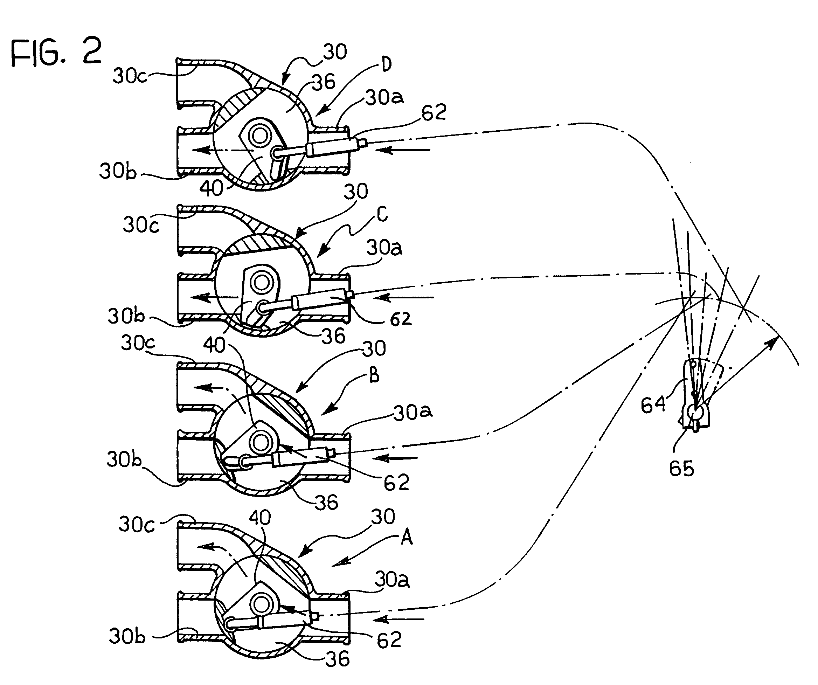

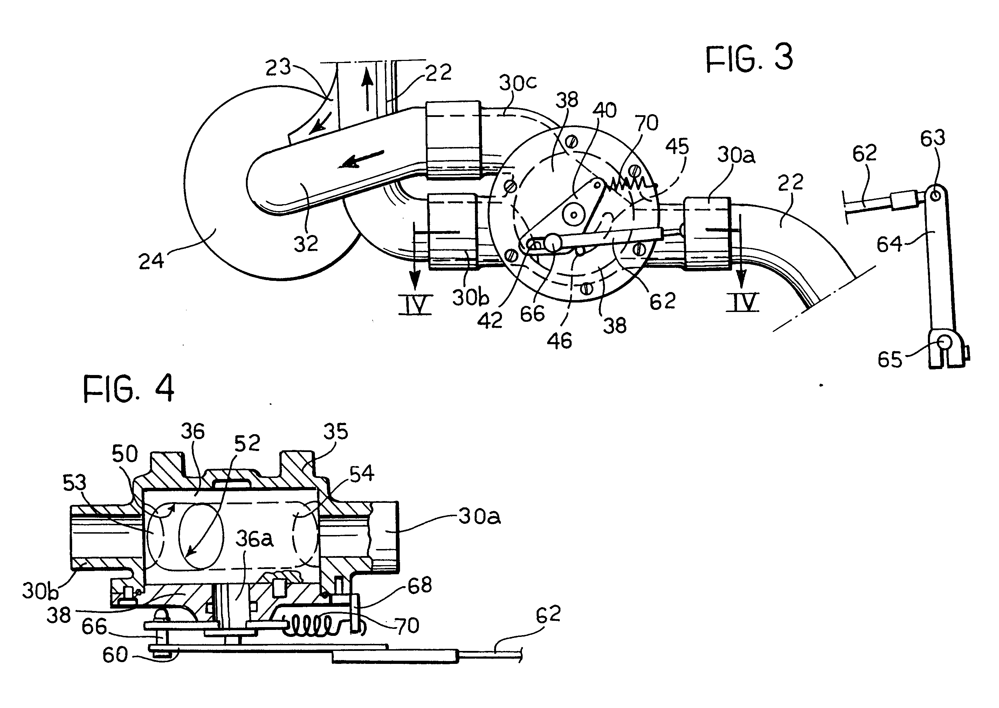

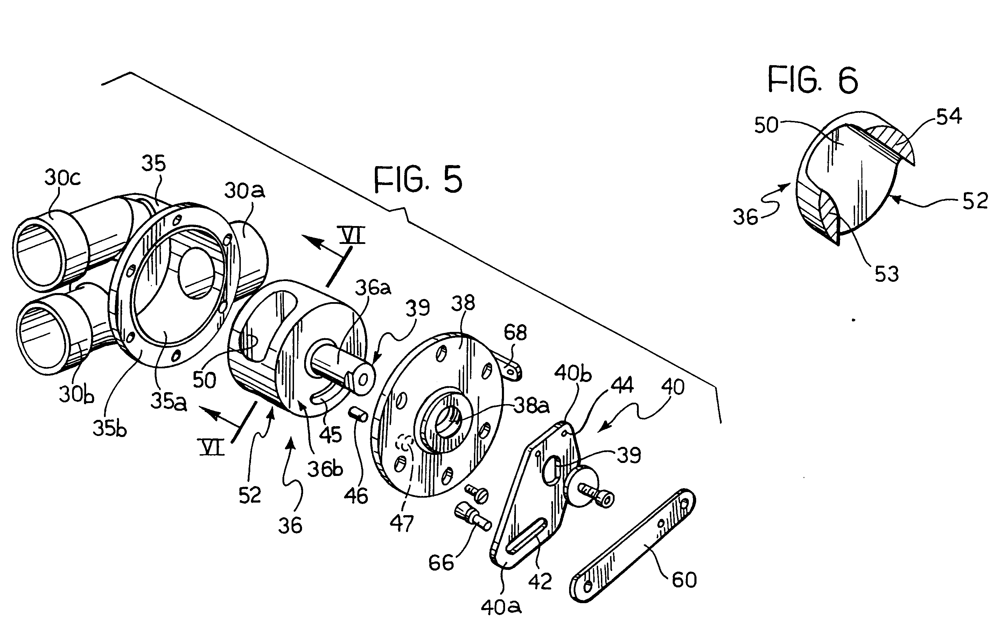

As can clearly be seen in Figures 2 and 3, the cylindrical obturator 36 is rotated, in correspondence with the shaped plate 40, by the end 60 of a rod 62 which is articulated at 63 to a control lever 64 keyed to the control shaft 65 of the injection-pump regulator of the engine. The end 60 of the rod 62 is connected to the shaped plate 40 in correspondence with the slot 42 by means of a transverse sliding pin 66, for the reasons which will become clear from the description below. A tension spring 70 is interposed between the hole 44 (fig. 5) in the plate 40 and an L-shaped, bent flange 68 of the cover 38 and is adapted to urge the obturator 36 to rotate clockwise (with reference to Figure 3).

When the engine 10 is idling, the valve 30 is in the configuration indicated A in Figure 2. In this configuration, the smaller side wall 53 of the cylindrical obturator 36 completely blocks the outlet opening 30b of the valve, enabling the liquid coming from the sea-water intake to bypass the air-water exchanger 20.

In the configuration indicated B, the position of the obturator 36 is unchanged from the idling configuration, despite the fact that the control lever 64 associated with the control shaft 65 of the injection-pump regulator has rotated through a predetermined angle. This is possible by virtue of the presence of the slot 42 in which the pin 66 slides and of the action of the spring 70 which keeps the obturator 36 in the bypass position.

From the configuration indicated B, as the angle of rotation of the control lever 64 of the injection-pump accelerator increases, the obturator 36 starts to shut, with its wall 54, the bypass on the water side of the air/water exchanger 20 and partially to open the opening 30b of the valve, until it is in the position indicated C in Figure 2, which corresponds to the passage of all the water towards the exchanger 20. In the configuration C of the valve 30, the wall 53 of the obturator 36 no longer closes the passage towards the opening 30b, whilst the wall 54 completely blocks the opening 30c of the valve.

From the configuration C to the configuration indicated D in Figure 2 (which corresponds to the maximum opening of the accelerator control of the injection pump and therefore to the maximum running speed of the engine), the flow conditions of the valve 30 do not change by virtue of the particular shape of the side walls 53 and 54 of the cylindrical obturator 36, as well as by virtue of the relative positions of the openings 30a and 30b.

During the stage when the throttle control is released, the operation of the valve 30 is identical to that described above, with the sole difference that the sense of rotation of the cylindrical obturator 36 is reversed.

Clearly, the rate of rotation of the engine at which the bypass flow of the air/water exchanger starts to be choked can be varied by varying the length of the slot 42 or the shapes of the obturator 36 and the valve body 35, substantially in dependence on the climate in which the engine will operate and on the type of engine.

## Claims

1. A supercharged diesel engine, particularly for marine applications, including an air/liquid heat exchanger (20) for cooling the compressed air supplied to the cylinders a three-way valve (30) inserted in a pipe (22) for supplying liquid to the exchanger (20) and in which a first outlet opening (30b) is connected to the air/liquid exchanger (20) and a second outlet opening (30c) is connected to a pipe (32) for bypassing the exchanger (20), such valve (30) being controlled by the accelerator control of the injection pump (65, 64) of the engine (10), wherein the three-way valve (30) has control means (36a, 40, 42, 68, 70) for keeping the first outlet opening (30b) completely closed for a predetermined range of positions of the injection-pump accelerator control (65, 64) corresponding to low speeds of the engine (10),
characterized in that the three-way valve (30) is of the type with a cylindrical obturator (36) inserted for rotation in a hollow cylindrical body (35) defining inlet and outlet ducts connected to respective openings, the control means comprising:
- a lever element (40) keyed to the operating shaft (36a) of the obturator (36) outside the body (35) and provided with a slot (42) which cooperates slidingly with an end (60, 66) of an operating member (62) connected mechanically to the injection-pump accelerator control (65, 64) of the engine (10),
- resilient means (70) for biassing the obturator (36) towards a position corresponding to the condition in which the exchanger (20) is completely bypassed, the obturator (36) being kept in that position when the throttle control (65, 64) is operated up to a predetermined position of the latter by virtue of the ability of the end (60, 66) of the operating member (60, 62) to slide in the slot (42) of the lever element (40).

2. An engine according to claim 1, characterised in that the shape of the obturator (36) is such as to enable all the liquid to be conveyed to the air/liquid exchanger (20) when a predetermined position (C) of the throttle control (65, 64) is passed.

## Patentansprüche

1. Ein aufgeladener Dieselmotor, insbesondere für Schiffsanwendungen, mit einem Luft/Flüssigkeits-Wärmetauscher (20) zum Kühlen der den Zylindern zugeführten Druckluft, einem Drei-Wegeventil (30), das in einer Leitung (22) zur Zufuhr von Flüssigkeit zum Wärmetauscher (20) angeordnet ist und in welchem eine erste Auslaßöffnung (30b) an den Luft/Flüssigkeits-Wärmetauscher (20) angeschlossen ist und eine zweite Auslaßöffnung (30c) an eine den Wärmetauscher (20) umgehende Leitung (32) angeschlossen ist, wobei das Ventil (30) durch die Gashebelsteuerung der Einspritzpumpe (65,64) des Motors (10) betätigt wird und das Drei-Wegeventil (30) eine Betätigungseinrichtung (36a,40,42,68,70) aufweist, die dazu vorgesehen ist, die erste Auslaßöffnung (30b) für einen vorbestimmten, niedrigen Geschwindigkeiten des Motors (10) entsprechenden Bereich von Stellungen der Einspritzpumpen-Gashebelsteuerung (65,64) vollständig geschlossen zu halten,
dadurch gekennzeichnet, daß das Drei-Wegeventil (30) von der Ausführung mit einem zylindrischen Schließkörper (36) ist, der drehbar in einem hohlzylindrischen Körper (35) angeordnet ist, der mit jeweiligen Öffnungen verbundene Einlaß- und Auslaßkanäle definiert, wobei die Betätigungseinrichtung umfaßt:
- ein Hebelelement (40), das am Betätigungsschaft (36a) des Schließkörpers (36) außerhalb des Körpers (35) befestigt und mit einem Schlitz (42) versehen ist, der verschiebbar mit einem Ende (60,66) eines Betätigungselementes (62) zusammenwirkt, das mechanisch mit der Einspritzpumpen-Gashebelsteuerung (65,64) des Motors (10) verbunden ist,
- eine elastische Einrichtung (70) zum Beaufschlagen des Schließkörpers (36) in Richtung einer Stellung, die dem Zustand entspricht, in welchem der Wärmetauscher (20) vollständig umgangen wird, wobei der Schließkörper (36) aufgrund der Verschiebbarkeit des Endes (60,66) des Betätigungselementes (60,62) im Schlitz (42) des Hebelelementes (40) in dieser Stellung gehalten wird, wenn die Gassteuerung (65,64) bis zu einer vorbestimmten Stellung betätigt wird.

2. Ein Motor nach Anspruch 1, dadurch gekennzeichnet, daß der Schließkörper (36) eine Form aufweist, die es ermöglicht, die gesamte Flüssigkeit dem Luft/Flüssigkeits-Wärmetauscher (20) zuzuführen, wenn eine vorbestimmte Stellung (C) der Gassteuerung (65,64) überschritten ist.

## Revendications

1. Moteur diesel suralimenté, en particulier pour utilisations marine, comprenant un échangeur de chaleur air/liquide (20) pour assurer le refroidissement de l'air comprimé fourni aux cylindres, une valve à trois voies (30) étant insérée dans un tuyau (22) destiné à fournir le liquide à l'échangeur (20) et dans laquelle une première ouverture de sortie (30b) est reliée à l'échangeur air/liquide (20) et une seconde ouverture de sortie (30c) est reliée à un tuyau (32) destiné à opérer la dérivation de l'échangeur (20), cette valve (30) étant commandée par la commande d'accélérateur de la pompe d'injection (65,64) du moteur (10), dans lequel la valve trois-voies (30) comporte un moyen de commande (36a,40,42,68,70) pour maintenir la première ouverture de sortie (30b) entièrement fermée pour une plage de positions déterminée de la commande d'accélérateur de pompe d'injection. (65,64), correspondant aux basses vitesses du moteur (10),
caractérisé en ce que la valve à trois voies (30) est du type comprenant un obturateur cylindrique (36) inséré à rotation dans un corps cylindrique creux (35) définissant des conduits d'entrée et de sortie reliés aux ouvertures respectives, le moyen de commande comprenant :
- un élément à levier (40) claveté sur l'arbre de commande (36a) de l'obturateur (36), à l'extérieur du corps (35) et pourvu d'une fente (42) qui coopère de façon coulissante avec une extrémité (60,66) d'un organe opérationnel (62) relié mécaniquement à la commande d'accélérateur de pompe d'injection (65,64) du moteur (10),
- un moyen élastique (70), pour rappeler l'obturateur (36) vers une position correspondant à l'état dans lequel l'échangeur (20) est entièrement contourné, l'obturateur (36) étant maintenu dans cette position lorsque la commande d'étranglement (65,64) est actionnée jusqu'à une position déterminée de cette dernière, grâce à la possibilité pour l'extrémité (60,66) de l'organe opérationnel (60, 62) de coulisser dans la fente (42) de l'élément à levier (40).

2. Moteur selon la revendication 1, caractérisé en ce que la forme de l'obturateur (36) est telle qu'elle permet à la totalité du liquide d'être transportée à l'échangeur air/liquide (20), lorsqu'une position prédéterminée (C) de la commande d'étranglement (65, 64) a été dépassée.
